(19) Europäisches Patentamt
European Patent Office
Office européen des brevets

(11) Veröffentlichungsnummer: **0 353 469**
**A1**

(12) # EUROPÄISCHE PATENTANMELDUNG

(21) Anmeldenummer: **89112064.4**

(51) Int. Cl.[4]: **E21B 43/22**

(22) Anmeldetag: **01.07.89**

(30) Priorität: **06.07.88 DE 3822834**

(43) Veröffentlichungstag der Anmeldung:
**07.02.90 Patentblatt 90/06**

(84) Benannte Vertragsstaaten:
**DE GB NL**

(71) Anmelder: **HOECHST AKTIENGESELLSCHAFT**
**Postfach 80 03 20**
**D-6230 Frankfurt am Main 80(DE)**

(72) Erfinder: **Miller, Dennis, Dr.**
**Waldallee 73**
**D-6239 Eppstein/Taunus(DE)**
Erfinder: **Schmidt, Manfred, Dr.**
**Mörikestrasse 9**
**D-6233 Kelkheim (Taunus)(DE)**
Erfinder: **Von Halasz, Sigmar-Peter, Dr.**
**Die Ritterwiesen 1c**
**D-6237 Liederbach(DE)**
Erfinder: **Holst, Arno, Dr.**
**Drususstrasse 3**
**D-6200 Wiesbaden(DE)**
Erfinder: **Pusch, Günter, Prof. Dr.**
**Wilhelm-Hasselmann-Strasse 1c**
**D-3100 Celle(DE)**
Erfinder: **Rosenthal, Gerhard, Dr.**
**Am Hallenbad 26**
**D-2000 Norderstedt(DE)**

(54) **Wässrige Tensideinstellungen und deren Verwendung zusammen mit einem Polymer bei der Erdölförderung in hochsalinen Lagerstätten.**

(57) Wäßrige Tensideinstellungen enthaltend ein Tensidgemisch aus

a) 55 bis 85 Gew.-% eines Alkansulfonats, Petrolsulfonats, Olefinsulfonats, Alkylbenzolsulfonats mit durchschnittlichem Molekulargewicht 280-400, und

b) 15 bis 45 Gew.-% eines Ethersulfonats der Formel

$RO(AO)_mA'SO_3M$

wobei R $C_6$-$C_{20}$-Alkyl oder eine durch ein bis drei Alkylgruppen mit zusammen 6 bis 20 C-Atomen substituierte Phenylgruppe, A eine $C_2H_4$- oder $C_3H_6$-Gruppe oder eine Mischung beider Gruppen, A' -$C_2H_4$-oder -$C_3H_6$-, m eine Zahl von 3 bis 25 und M ein Alkalimetallatom oder Ammonium bedeuten.

Diese Tensidmischungen eignen sich für die tertiäre Erdölförderung in Kombination mit speziellen salzstabilen Copolymeren auf Basis Polyarylamid. Sie bilden mit hochsalinen Wässern stabile Lösung oder Dispersionen.

EP 0 353 469 A1

# Wäßrige Tensideinstellungen und deren Verwendung zusammen mit einem Polymer bei der Erdölförderung in hochsalinen Lagerstätten

Bei der Förderung von Erdöl erhält man normalerweise nur einen geringen Anteil des in der Lagerstätte vorhandenen Erdöls. Um die Ausbeute zu erhöhen, preßt man Wasser in die Lagerstätte ein - sog. Wasserfluten - oder man preßt eine wäßrige Tensidlösung ein - sog. Tensidfluten. Bei diesem Tensidfluten wird das Tensid als wäßrige Lösung oder Dispersion in die Lagerstätte injiziert. Voraussetzung hierfür ist, daß diese Lösungen oder Dispersionen stabil sind. Es hat sich außerdem als besonders günstig für die Entölung erwiesen, wenn diese Lösungen oder Dispersionen in der Lagerstätte mit dem Öl Mikroemulsionen bilden. Die Art der beim Tensidfluten brauchbaren Tenside hängt von den speziellen Bedingungen der Lagerstätte ab, so etwa von der Temperatur, der Art des Gesteins und der Zusammensetzung des Rohöls. Besonders wichtig sind dabei die Salinität und die Temperatur der Lagerstätte, da sich höhere Salzgehalte und Temperaturen negativ auf die Stabilität und Homogenität der Tensidlösung auswirken und dadurch die Wirksamkeit der Tensidlösung beeinträchtigen.

Es ist bereits bekannt, beim Tensidfluten Alkylphenolpolyglykolethersulfonate zusammen mit anderen, nicht alkoxylierten Sulfonaten zu nehmen (US-A 4 018 278, sowie Gulden, Ber.-Dtsch. Ges. Mineraloelwiss. Kohlechem. 290, 121, (1980)). Manchmal ist es auch möglich, durch Zusatz von nichtionischen Tensiden eine phasenstabile Tensid/Salzwasser-Mischung zu erreichen. Solche Mischungen werden in US-A 4 077 471 und DE-A 3 725 938 beschrieben. Ebenfalls beschreiben GB-A 21 56 406, US-A 3 890 239 und US-A 4 463 806 Mischungen, die ein zusätzliches Cotensid benötigen. In US-A 4 088 189 wird beschrieben, daß durch Erwärmen der Tensidmischungen vor der Injektion unerwünschte Phasentrennungen verhindert werden können.

Es wurde nun gefunden, daß bestimmte Tensidmischungen von Alkylphenolpolyglykolethersulfonaten zusammen mit einfachen Sulfonaten im hochsalinen Bereich sowohl stabile wäßrige Lösungen oder Dispersionen bilden als auch mit dem Öl eine Mikroemulsion bilden. Das Mischungsverhältnis Ethersulfonat/einfaches Sulfonat muß in einem bestimmten Bereich liegen. Darüberhinaus wurde gefunden, daß nur bestimmte Typen von einfachen Sulfonaten für solche Mischungen geeignet sind.

Gegenstand der Erfindung sind wäßrige Tensideinstellungen enthaltend ein Tensidgemisch aus

a) 55 bis 85, vorzugsweise 65 bis 80 Gew.-% eines primären oder sekundären Alkansulfonats, Petrolsulfonats, Olefinsulfonats, Alkylbenzolsulfonats, jeweils mit einem durchschnittlichen Molekulargewicht von 280-400, vorzugsweise eines sek. Alkansulfonats oder alkylbenzolsulfonats mit einem Molekulargewicht von 300-360 und

b) 15 bis 45, vorzugsweise 20 bis 35 Gew.-% eines Ethersulfonats der Formel

$RO(AO)_mA'SO_3M$

wobei R $C_6$-$C_{20}$-Alkyl oder eine durch ein bis drei Alkylgruppen mit zusammen 6 bis 20 C-Atomen substituierte Phenylgruppe, A eine $C_2H_4$- oder $C_3H_6$-Gruppe oder eine Mischung beider Gruppen, A' - $C_2H_4$- oder - $C_3H_6$-, m eine Zahl von 3 bis 25, vorzugsweise von 10 bis 20 und M ein Alkalimetallatom oder Ammonium bedeuten.

Die erfindungsgemäßen Mischungen haben den besonderen Vorteil, daß sie für Lagerstätten mit Temperaturen über 60 °C mit einem Salzgehalt von 80 bis 230 g/l geeignet sind. Sie können auch in Lagerstätten, die erhebliche Mengen Ca- und Mg-Salz haben, benutzt werden.

Da die erfindungsgemäßen Mischungen nur einen kleinen Anteil des relativ teuren Ethersulfonats enthalten, haben sie wirtschaftliche Vorteile. Ein weiterer Vorteil liegt darin, daß die optimale Salinität kaum temperaturabhängig ist. Dies ist besonders wichtig, wenn es starke Variationen in der Temperatur zwischen verschiedenen Teilen der Lagerstätte gibt.

Der Gesamttensidgehalt in der beschriebenen wäßrigen Einstellung liegt bei etwa 20 bis 80 Gew.-% Diese wäßrigen Einstellungen werden für das Tensidfluten weiter mit Salzwasser mit einer Salinität zwischen 80 und 230 g/l verdünnt auf einen Gehalt an Tensid von ca. 0,1 bis 10 Gew.-% Vorzugsweise nimmt man hierfür das mehr oder weniger salzhaltige Wasser aus der Lagerstätte.

Zur Verbesserung der Wirkung kann man dem Flutwasser auch noch Rohöl bzw. Kohlenwasserstoffe oder $C_3$-$C_6$-Alkohole zusetzen. Eine Rohölförderung durch Tensidfluten auf der Grundlage der oben beschriebenen Tensidmischung wird in üblicher Weise mit einem Polymerfluten verbunden.

Besonders geeignet zu diesem Zweck sind Copolymeren bestehen aus 2 bis 80, vorzugsweise 5 bis 60 Gew.%

Resten der Formel I

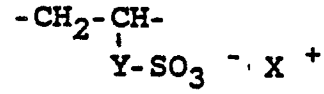

(I)

1 bis 80, vorzugsweise 2 bis 60 Gew.% Resten der Formel II

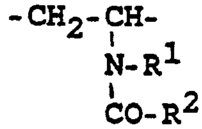

(II)

und 20-97, vorzugsweise 38 bis 93 Gew.% Resten der Formel III

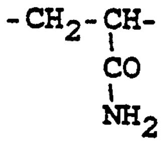

(III)

sowie deren durch Partialhydrolyse erhältliche Derivate, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte Bindung und $X^+$ ein Kation bedeuten. Diese Copolymeren sind in dem EP Patent 44508 beschrieben.

Die Lagerstätte kann mit Tensid und Polymer gleichzeitig oder erst mit Tensid und dann mit Polymer geflutet werden. Der Gehalt dieser Polymeren in dem Flutwasser beträgt ca. 200-5000, vorzugsweise 500-2000 ppm.

Experimenteller Teil

Prüfung des Phasenverhaltens

Für Mikroemulsionsversuche wurden gleiche Mengen Öl und Salzwasser genommen und man beobachtete den Salinitätsbereich, in dem sich das Gemisch in die drei Phasen Salzwasser, Mikroemulsion und Öl trennte. Die Salinität, bei der die Mikroemulsion gleiche Anteile von Öl und Wasser enthält, wird als optimale Salinität bezeichnet. Das Volumenverhältnis Öl/Tensid in der Mikroemulsion bei der optimalen Salinität wird als Solubilisierungsparameter bezeichnet.

Es wurden auch verschiedene Tensid/Salzwasser-Mischungen ohne Öl mit unterschiedlicher Salinität hergestellt. Nach guter durchmischung wurden die Proben für 24 Stunden temperiert. Man unterscheidet drei Typen von Phasenverhalten

a) klare Lösung

b) Phasentrennung

c) transparente oder trübe homogene Dispersion.

Als Salz wurde ein Modell-Lagerstättensalz bestehend aus 95 % NaCl, 3 % $CaCl_2$, 1,75 % $MgCl_2$ und 0, 25 % $Na_2SO_4$ benutzt. Verschiedene Kohlenwasserstoffgemische dienten als Modellöle (Tabelle 1). Der Tensidgehalt betrug 2 % bezogen auf das Salzwasser. Eine Versuchsreihe wurde mit einem Norddeutschen Rohöl und einem Tensidgehalt von 3% durchgeführt.

**Flutversuche**

Die Flutversuche wurden an Bentheimer Sandsteinkernen (50x8 cm) durchgeführt. Das Gestein hatte eine Porosität von 25 % und eine Permeabilität von 1500 Millidarcy. Es wurde nach folgendem Schema gearbeitet:

1) Sättigung des Porenraums mit Modellwasser. Dabei wird die Porosität bestimmt.

2) Durchpumpen von Wasser und Bestimmung der Permeabilität.

3) Sättigung des Porenraumes mit Öl.

4) Wasserfluten. Die nicht weiter reduzierbare physikalische Restölsättigung $S_{or1}$ wird eingestellt.

5) Tensidfluten. Ein Porenvolumen der Tensidlösung mit einer Filtergeschwindigkeit von $V_f$ = 0,25 m/d wird injiziert und es wird mit der ca. dreifachen Menge des Porenvolumens an Wasser nachgeflutet. Die Salinität des Wassers bzw. der Tensidlösung entspricht der optimalen Salinität für Mikroemulsionsbildung mit dem Öl. Die Restölsättigung $S_{or2}$ wird dann ermittelt. Die Differenz $S_{or1}$ - $S_{or2}$ ist ein Maß für die Wirksamkeit des Tensids bei der Entölung. Ein hoher mittlerer Ölanteils der Ölbank ist ebenfalls günstig. Durch Bestimmung des Tensids im Flutwasser wurde auch die Retention (Tensidverluste) ermittelt.

Beispiele

1. Einfluß des Mischungsverhältnisses auf das Phasenverhalten

Figur 1 und 2 zeigen den Einfluß des Mischungsverhältnisses der Zwei-Komponenten Systeme auf das Phasenverhalten. Die Bestandteile der Mischungen sowie deren Löslichkeit in Salzwasser sind in Tabelle 2 erläutert. Der Anteil an Ethersulfonat (d.h. Komponenten b) wurde wie folgt variiert: a 20 %, b 30 %, c 50 %, d 70 %. Die Differenz zu 100 % ergibt dann den Anteil an Alkansulfonat. Modellöl I wurde benutzt.

Die Bedeutung der Ergebnisse wird anhand von Abbildung 1 dargestellt. Für Abbildung 2 gilt eine analoge Betrachtung. Das Ethersulfonat ist in Salzwasser gut löslich, das Alkansulfonat dagegen schlecht löslich. Es wäre daher naheliegend, einen möglichst großen Anteil Ethersulfonat zu nehmen. Das Verhalten einer solchen Mischung wird in Abbildung 1d gezeigt. Die Tensidmischung bildet bis zu Salinitäten über 100 g/l eine klare Lösung in Salzwasser. Dieser Bereich der Löslichkeit wird durch den waagrecht schraffierten Bereich 1 dargestellt, der auch für den im Bild nicht gezeigten Salinitätsbereich 0-80 g/l gilt. Bei höheren Salinitäten findet eine Trennung in tensidreiche und tensidarme Phasen statt. In Anwesenheit von Öl wird im Bereich 2 eine Mikroemulsion gibildet. In diesem Fall gibt es aber keine Temperatur- und Salinitätsbedingungen, bei der gleichzeitig eine stabile Tensid/Salzwasser-Lösung (ohne Öl) und eine Mikroemulsion (mit Öl) gebildet werden kann, d.h. die Bereiche 1 und 2 überlappen sich nicht. Die Existenz einer solchen Überlappungszone ist für die Entölung aber sehr vorteilhaft.

In Abbildung 1c gibt es ebenfalls keine Überlappung der Bereiche 1 und 2. Bei sehr hoher Salinität findet man aber überraschenderweise, daß die Tensidmischung wieder im Salzwasser löslich wird. Dieser Bereich der Löslichkeit wird durch die waagrecht schraffierte Fläche 3 dargestellt. Die Flüssigkeit ist homogen aber im Gegensatz zu den Lösungen in 1 transparent oder trüb. Solche Tensid/Salzwasser-Mischungen sollen als "homogene Dispersionen" bezeichnet werden. Durch weiteres Herabsetzen des Anteils an Ethersulfonat, wie bei den erfindungsgemäßen Mischungen in Abbildung 1a und 1b, erreicht man eine Überlappung der Bewreich 2 und 3. Ein solches Phasenverhalten ist für die Entölung günstig.

Dieses Ergebnis ist sehr überraschend, denn eine Verringerung des Anteils des im Salzwasser besser löslichen Tensids erhöht hier die Löslichkeit der Mischung im hochsalinen Bereich.

Der Anteil an Ethersulfonat darf aber nicht zu niedrig sein, sonst flockt das Alkansulfonat aus. Bei den Tensidkombinationen in Tabelle 1 braucht man mindestens ca. 15 % Ethersulfonat, um solche Ausfällungen zu verhindern.

2. Phasenverhalten erfindungsgemäßer Mischungen

Weitere erfindungsgemäße Mischungen werden in Tabelle 3 gezeigt.
Abbildung 3 und 4 zeigen das Phasenverhalten der Tensidmischungen 1 und 2 aus Tabelle 3. Die Ziffern 2 und 3 haben dieselbe Bedeutung wie in Beispiel 1. Die Überlappung dieser beiden Bereiche zeigt, daß diese Mischungen für die tertiäre Erdölförderung wirksam sind.

Tabelle 4 zeigt das Phasenverhalten einiger erfindungsgemäßer Mischungen aus Tabelle 3. Der Wert von m (Alkoxylierungsgrad des Ethersulfonats) kann über einen großen Bereich variiert werden ohne Beeinträchtigung des Phasenverhaltens. Ein hoher Wert von m hat aber den Vorteil, daß die Mikroemulsion über einen größeren Salinitätsbereich gebildet wird.

3. Einfluß der Struktur der Komponente a)

i) Mischung aus 80 % sek. Alkansulfonat und 20 % $(C_4H_9)_3$ $C_6H_2O(CH_2CH_2O)_9CH_2CH_2SO_3Na$.

Die Mikroemulsionsbildung solcher Tensidmischungen mit Modellöl I bei 60 °C wurde für verschiedene Molekulargewichte des Alkansulfonats untersucht. Die optimale Salinität hängt stark vom Molekulargewicht ab. Für die Anwendung im Salinitätsbereich 80 - 230 g/l wurde gefunden, daß das Alkansulfonat ein Molekulargewicht zwischen 280 und 400 haben soll.

ii) Mischungen aus 70 % sek. Kohlenwasserstoffsulfonat und 30 % $C_9H_{19}.C_6H_4.O(CH_2CH_2O)_{12}CH_2CH_2SO_3Na$.

Eine solche erfindungsgemäße Mischung auf Basis sek. Alkansulfonat mit Molekulargewicht 328 zeigt ein gutes Phasenverhalten (siehe Beispiel 1 und Abb. 1b). Mischung Nr. 4 aus Tabelle 3 ist ein entsprechendes erfindungsgemäßes Gemisch auf Basis Alkylbenzolsulfonat mit Molekulargewicht 348. Sie zeigt ebenfalls ein günstiges Phasenverhalten (s. Tabelle 4). Bei einem Vergleichsgemisch auf Basis Petrolsulfonat mit dem Molekulargewicht 410 beobachtet man dagegen keine homogene Dispersion in dem Salinitätsbereich 80-230 g/l bei 60 °C. Ebenfalls wurde mit Modellöl I bei 60 °C keine Mikroemulsion mit dieser Mischung innerhalb dieses Salinitätsbereichs beobachtet. Tensidmischungen, die zum größten Teil aus Sulfonaten mit Molekulargewicht über 400 bestehen, scheinen für den Einsatz in hochsalinen Lagerstätten nicht geeignet zu sein.

iii) Vergleich zwischen primärem und sekundärem Alkansulfonat

Eine Mischung aus 80 Teilen sek. Alkansulfonat (M = 300) und 20 Teile $(C_4H_9)_3C_6H_2O(CH_2CH_2O)_9CH_2CH_2SO_3Na$ war in Salzwasser gut löslich. Bei einem entsprechenden Gemisch mit einem primären Alkansulfonat flockte das Tensid aber aus.

4. Flutversuche

Tabelle 5 zeigt das Ergebnis der Flutversuche mit drei erfindungsgemäßen Mischungen. Eine gute Entölung wurde gefunden. Die Retention ist niedrig.

5. Kompatibilität zwischen Tensid und Polymer

Wird das Tensid in Kombination mit Polymeren Benutzt, so ist es wichtig, daß die Verdickung des Flutwassers durch das Polymer nicht durch den Zusatz des Tensids beeinträchtigt wird. In Tabelle 6 werden Messungen der Viskosität bei niedriger Scherkraft gezeigt. Die Salinität beträgt 175 g/l und die Temperatur 60 °C. Das Polymer ist ein Copolymer aus Vinylsulfonat, N-Vinylacetamid und Acrylamid. Es zeigt auch bei dieser hohen Salinität eine erhebliche Verdickerwirdung. Durch die Zugabe von 500 ppm des Polymers zu dem Salzwasser wird die Viskosität um 0,82 m Pas erhöht, durch Zugabe von 500 ppm des Polymers zu einer 1 %igen Tensidlösung wird dagegen die Viskosität um 1,76 m Pas erhöht. Es gibt also eine synergistische Wirkung bezüglich der Verdickung bei dieser Tensid-Polymer Kombination.

Tabelle 1

| Modellöle | | | |
|---|---|---|---|
| Nr. | Beschreibung | Dichte 25 °C g/cm$^3$ | Brechungsindex 25 °C |
| I | vorwiegend Alkane | 0,830 | 1,4555 |
| II | Alkane mit ca. 20 % aromatisch/naphthenische Kohlenwasserstoffe | 0,824 | 1,4572 |
| III | Raffiniertes Öl naphthenisch | 0,881 | 1,4877 |

Tabelle 2

| Struktur und Löslichkeit in Salzwasser von Tensiden in Beispiel 1 | | | | |
|---|---|---|---|---|
| Komponente a | | Komponente b | | Phasenverhalten von Mischungen |
| Bezeichnung | $s_{max}$ g/l | Bezeichnung | $s_{max}$ g/l | |
| Sek. Alkansulfonat M = 328 | 18 | $C_9H_{19}.C_6H_4.O(CH_2CH_2O)_{12}CH_2CH_2SO_3Na$ | > 230 | s. Abb. 1 |
| Sek. Alkansulfonat M = 328 | 18 | $(C_4H_9)_3.C_6H_2.O(CH_2CH_2O)_{17}CH_2CH_2SO_3Na$ | > 230 | s. Abb. 2 |
| $s_{max}$ ist die maximale Salinität, bei der das Tensid bei einer Konzentration von 20 g/l eine phasenstabile Lösung bilden kann (Meßtemperatur 60 ° C) | | | | |

Tabelle 3

| Erfindungsgemäße Tensidmischungen | | | | |
|---|---|---|---|---|
| Nr. | Komponente a | | Komponente b | |
| | Struktur | % | Struktur | % |
| 1 | Sek. Alkansulfonat M = 328 | 70 | $C_9H_{19}C_6H_4.O(CH_2CH_2O)_5CH_2CH_2SO_3Na$ | 30 |
| 2 | Sek. Alkansulfonat M = 328 | 70 | $(C_4H_9)_3C_6H_2.O(CH(CH_3)CH_2O)_3.(CH_2CH_2O)_9.CH_2CH_2SO_3Na$ | 30 |
| 3 | Sek. Alkansulfonat M = 328 | 70 | $(C_4H_9)_3.C_6H_2.O(CH_2CH_2O)_{18}(CH(CH_3)CH_2O)_4CH(CH_3)CH_2SO_3N$ | 30 |
| 4 | Alkylbenzolsulfonat M = 348 | 70 | $C_9H_{19}C_6H_4O(CH_2CH_2O)_{12}.CH_2CH_2SO_3Na$ | 30 |
| 5 | Sek. Alkansulfonat M = 328 | 70 | $C_9H_{19}.C_6H_4.O(CH_2CH_2O)_{12}.CH_2CH_2SO_3Na$ | 30 |
| 6 | Sek. Alkansulfonat M = 328 | 80 | $C_9H_{19}C_6H_4O(CH_2CH_2O)_5CH_2CH_2SO_3Na$ | 20 |
| 7 | Sek. Alkansulfonat M = 328 | 80 | $(C_4H_9)_3C_6H_2O(CH_2CH_2O)_9CH_2CH_2SO_3Na$ | 20 |
| 8 | Sek. Alkansulfonat M = 328 | 80 | $(C_4H_9)_3C_6H_2O(CH_2CH_2)_{17}CH_2CH_2SO_3Na$ | 20 |

Tabelle 4

| Phasenverhalten erfindungsgemäßer Mischungen | | | | | |
|---|---|---|---|---|---|
| Tensidmischung (s. Tabelle 3) | Phasenverhalten, 60° C | | | | |
| | Salzwasser + Tensid | | Salzwasser + Tensid + Öl | | |
| | $S_1$ g/l | $S_2$ g/l | Öl | optimale Salinität g/l | Solubilisierungsparameter |
| 2 | 90 | > 200 | II | 110 | 9,0 |
| 3 | 120 | > 200 | I | 130 | 6,5 |
| 4 | 70 | > 200 | IV | 160 | 3,5 |
| 4 | 70 | > 200 | I | 140 | 6,0 |
| 5 | 110 | > 200 | II | 150 | 7,0 |
| 5 | 110 | > 200 | III | 195 | 5,0 |

$S_1$ = niedrigste Salinität für die Bildung einer homogenen Dispersion
$S_2$ = höchste Salinität für die Bildung einer homogenen Dispersion
I, II, III - Modellöle (s. Tabelle 2) IV - Rohöl

Tabelle 5

| Flutversuche | | | |
|---|---|---|---|
| Tensidkonzentration 20 g/l Temperatur 60 °C Modellöl I | | | |
| Tensidmischung Nr. (s. Tabelle 3) | 6 | 7 | 8 |
| Salinität (g/l) | 105 | 210 | 155 |
| Restölsättigung vor Tensidfluten $Sor_1$ (%) | 34,2 | 40,2 | 35,1 |
| Restölsättigung nach Tensid- und Wasserfluten $Sor_2$ (%) | 8,0 | 10,9 | 9,0 |
| Mittl. Ölanteil der Ölbank $f_o$ (%) | 30 | 20 | 28 |
| Retention (mg/g Gestein) | 1,02 | 2,42 | 1,83 |

Tabelle 6

| Viskositätmessungen | | |
|---|---|---|
| Salinität 175 g/l ; Temperature 60 °C<br>Tensidmischung Nr. 5 (siehe Tabelle 3) | | |
| Konzentration | | Viskosität m Pas |
| Tensid | Polymer | |
| g/l | g/l | |
| 0 | 0 | 0,67 |
| 0 | 0,5 | 1,49 |
| 10 | 0 | 2,03 |
| 10 | 0,5 | 3,79 |

## Ansprüche

1. Wäßrige Tensideinstellungen enthaltend ein Tensidgemisch aus

a) 55 bis 85, vorzugsweise 65 bis 80 Gew.-% eines primären oder sekundären Alkansulfonats, Petrolsulfonats, Olefinsulfonats, Alkylbenzolsulfonats jeweils mit einem durchschnittlichen Molekulargewicht 280-400, vorzugsweise eines sek. Alkansulfonats oder Alkylbenzolsulfonats mit einem Molekulargewicht von 300-360 und

b) 15 bis 45, vorzugsweise 20 bis 35 Gew.-% eines Ethersulfonats der Formel

$RO(AO)_mA'SO_3M$

wobei R $C_6$-$C_{20}$-Alkyl oder eine durch ein bis drei Alkylgruppen mit zusammen 6 bis 20 C-Atomen substituierte Phenylgruppe, A eine $C_2H_4$- oder $C_3H_6$-Gruppe oder eine Mischung beider Gruppen, A' -$C_2H_4$- oder -$C_3H_6$-, m eine Zahl von 3 bis 25, vorzugsweise von 10 bis 20 und M ein Alkalimetallatom oder Ammonium bedeuten.

2. Wäßrige Tensideinstellungen nach Anspruch 1, dadurch gekennzeichnet, daß sie insgesamt 20 bis 80 Gew.-% der Tenside a) und b) enthalten.

3. Verfahren zur Erhöhung der Ausbeute an Rohöl durch Tensidfluten, dadurch gekennzeichnet, daß man in die Lagerstätte eine Wäßrige Tensideinstellung nach Anspruch 1 einpreßt, die 0,1 bis 10 Gew.% des Tensidgemischs enthält, und gleichzeitig oder nachträglich mit einer wässrigen Lösung flutet, die 10 bis 10000 ppm eines wasserlöslichen Polymers enthält.

4. Verfahren nach Anspruch 3, dadurch gekennzeichnet, daß man in die Lagerstätte eine wäßrige Tensideinstellung einpreßt, die 0,1 bis 10 Gew.% des Tensidgemischs nach Anspruch 1 und 80 bis 230 g Salz pro Liter enthält.

5. Verfahren nach Anspruch 3, dadurch gekennzeichnet, daß man eine wäßrige Tensideinstellung einpreßt, die als wasserlösliches Polymer ein Copolymer enthält, bestehend zu 2 bis 80 Gew.% aus Resten der Formel I

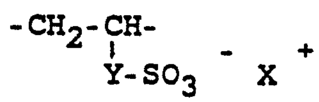

(I)

1 bis 80 Gew.% Resten der Formel II

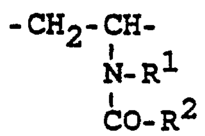

(II)

und 20 bis 97 Gew.% Resten der Formel III

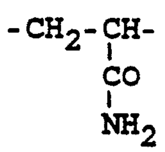

(III)

oder deren durch Partialhydrolyse erhältliche Derivate, wobei $R^1$ und $R^2$ gleich oder verschieden sind und Wasserstoff, Methyl, Ethyl oder zusammen auch Trimethylen, Y den Rest -CO-NH-C($CH_3$)$_2$-$CH_2$- oder eine direkte Bindung und $X^+$ ein Kation bedeuten.

6. Verfahren nach Anspruch 3, dadurch gekennzeichnet, daß man eine wäßrige Tensideinstellung einpreßt, die als wasserlösliches Polymer ein Copolymer enthält, bestehend zu 5 bis 60 Gew.% aus Resten der Formel I

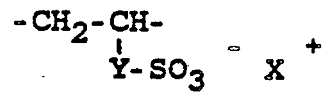

(I)

2 bis 60 gew.% Resten der Formel II

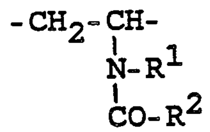

(II)

und 38 bis 93 Gew.% Resten der Formel III

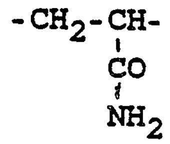

(III)

oder deren durch Partialhydrolyse erhältliche Derivate, wobei $R^1$ und $R^2$ gleich oder verschieden sind und Wasserstoff, Methyl, Ethyl oder zusammen auch Trimethylen, Y den Rest $-CO-NH-C(CH_3)_2-CH_2-$ oder eine direkte Bindung und $X^+$ ein Kation bedeuten.

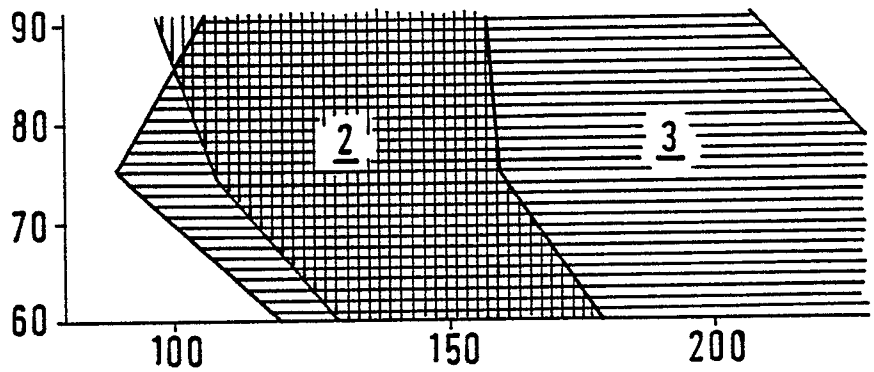


FIG.1a

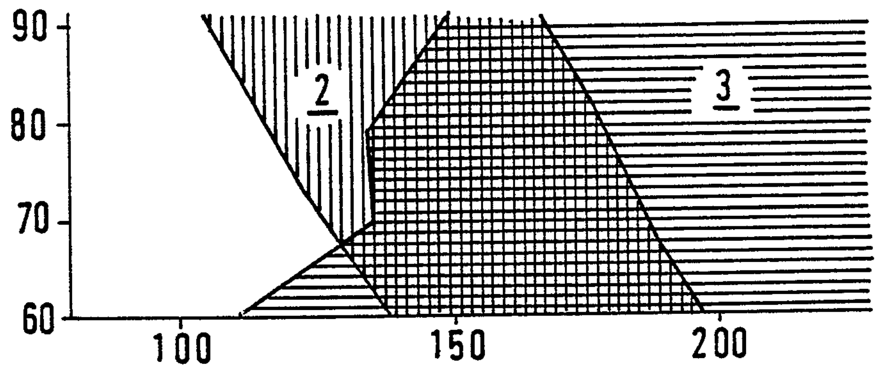


FIG.1b

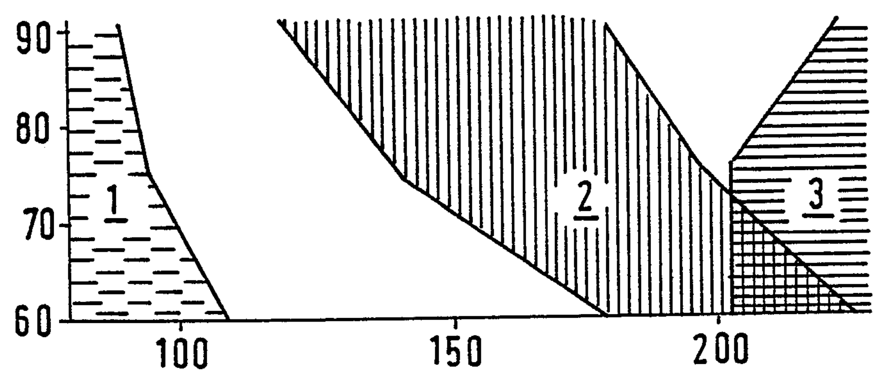


FIG.1c

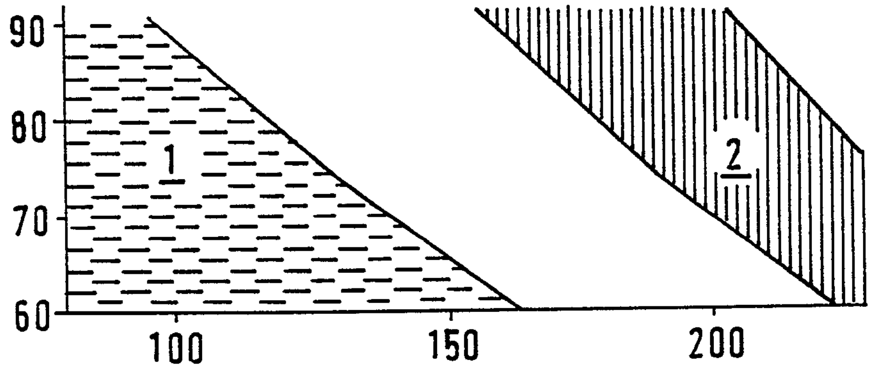


FIG.1d

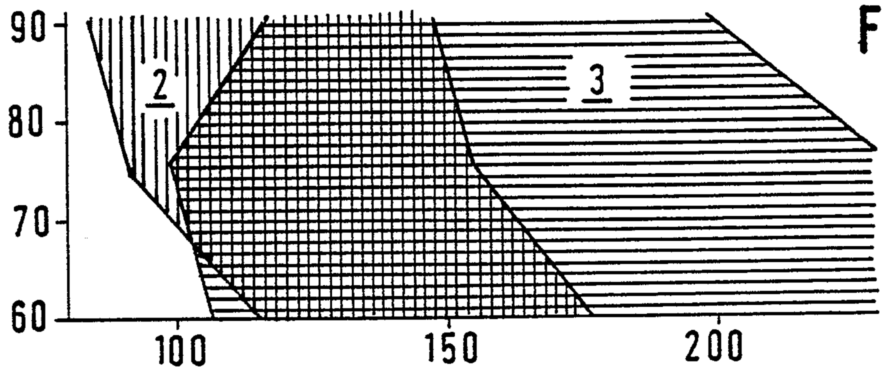


FIG. 2a

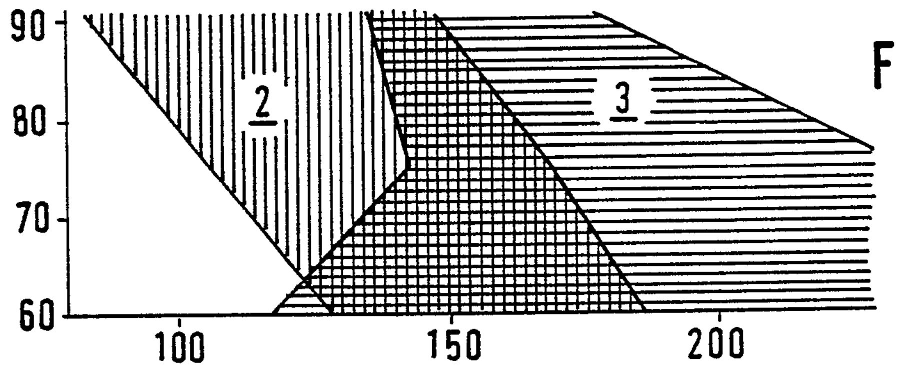


FIG. 2b

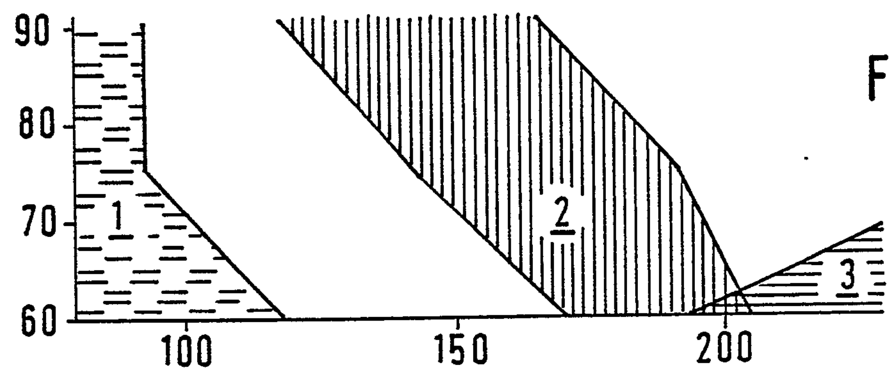


FIG.2c

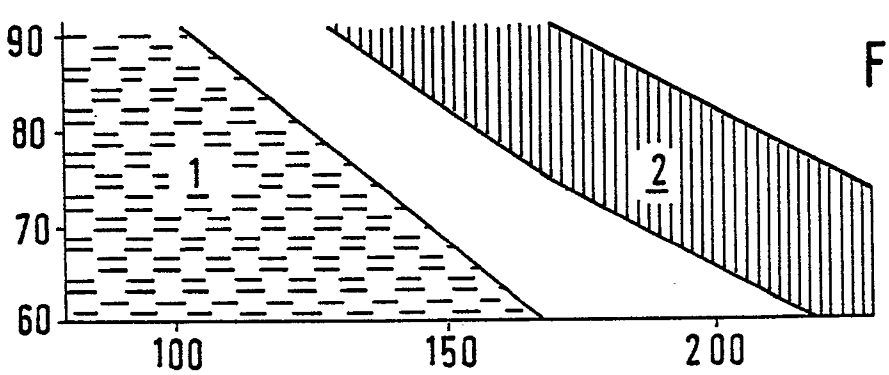


FIG.2d

FIG.3

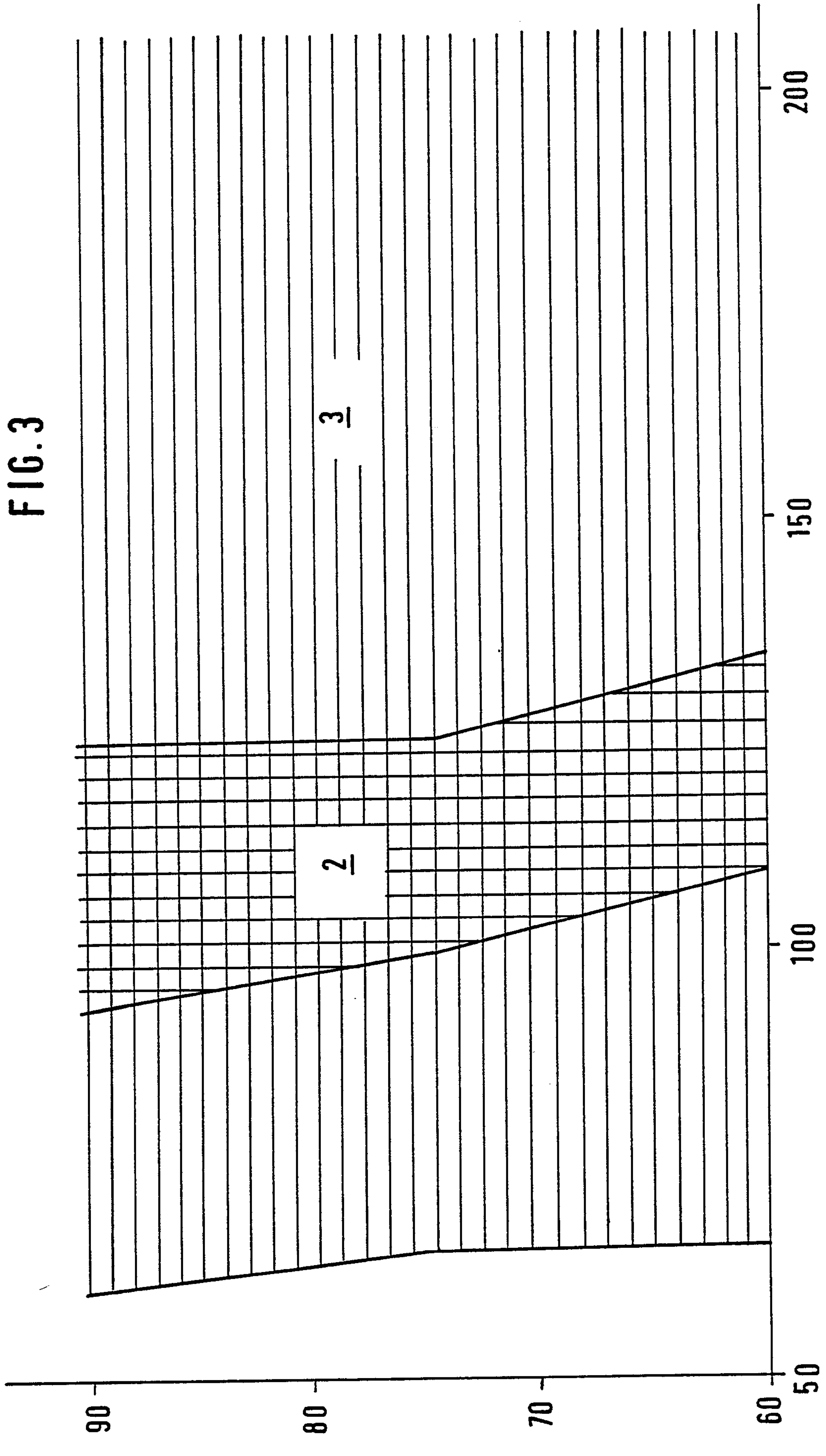

FIG. 4

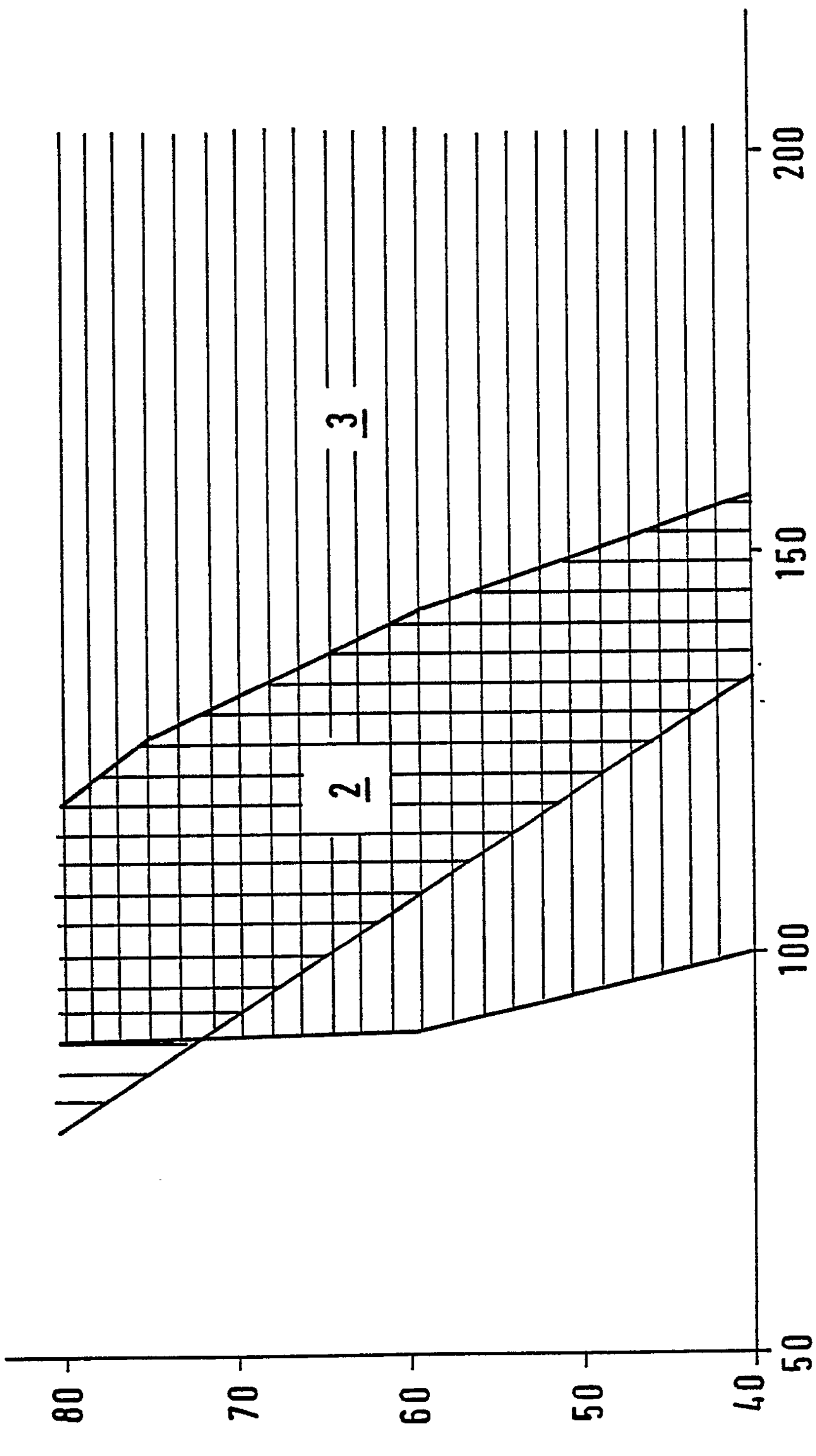

Europäisches Patentamt

# EUROPÄISCHER RECHERCHENBERICHT

Nummer der Anmeldung

EP 89 11 2064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X<br>Y | US-A-4 088 189 (R.D. SHUPE)<br>* Ansprüche 1,16,17,18,30,31,33,34,35; Spalte 5, Zeilen 32-68 * | 1,2<br>3-6 | E 21 B 43/22 |
| X | US-A-4 318 816 (V.H. SCHIEVELBEIN)<br>* Anspruch 1; Spalte 6, Zeilen 13-55 * | 1,2 | |
| X | US-A-4 465 602 (D.R. McCOY)<br>* Ansprüche 1-18; Spalte 4, Zeile 62 - Spalte 5, Zeile 11 * | 1,2 | |
| Y | EP-A-0 095 730 (CASSELLA AG)<br>* Ansprüche 1-7 * | 3-6 | |

RECHERCHIERTE SACHGEBIETE (Int. Cl.5)

E 21 B

Der vorliegende Recherchenbericht wurde für alle Patentansprüche erstellt

| Recherchenort | Abschlußdatum der Recherche | Prüfer |
|---|---|---|
| DEN HAAG | 06-11-1989 | ROTSAERT L.D.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)